# EUROPÄISCHE PATENTSCHRIFT

(11) **EP 1 309 098 B1**
(45) Veröffentlichungstag und Bekanntmachung des Hinweises auf die Patenterteilung: **07.09.2005**
(21) Anmeldenummer: 01125959.5
(22) Anmeldetag: 31.10.2001
(51) Int. Cl.: H04B 3/56

(54) **Ankoppeleinheit mit integriertem Steckkontaktbereich**
Coupling device with integrated plug contact
Appareil de couplage avec prise de contact intégrée

(43) Veröffentlichungstag der Anmeldung: 07.05.2003
(73) Patentinhaber: Power Plus Communications AG, 68163 Mannheim (DE)
(72) Erfinder: Stauch, Gert, Dr.-Ing., 69168 Wiesloch (DE); Leonhardt, Gottfried, Dipl.-Ing., 68723 Oftersheim (DE); Lehmann, Josef, Dipl.-Ing., 79761 Waldshut (DE)
(74) Vertreter: Kesselhut, Wolf

(56) Entgegenhaltungen:
- EP-A- 1 079 538
- GB-A- 2 341 283
- US-B1- 6 255 935

## Beschreibung

Die Erfindung bezieht sich auf eine Koppeleinrichtung zur Signaleinkopplung bzw. Signalauskopplung von Informationssignalen in Mittelspannungs-Energieverteilungsnetze bzw. aus Mittelspannungs-Energieverteilungsnetzen.

Es ist allgemein bekannt, Informationssignale über Hochspannungsleitungen mittels Power Line Communication (PLC) zu übertragen. Dieses Prinzip findet mehr und mehr Eingang auch in Mittelspannungs-Energieverteilungsnetze, vorzugsweise in Kabelnetze. Mittels Distribution Line Communication (DLC) können Daten (Informationssignale) in Ballungsgebiete oder zu einem abgelegenen Kunden auf dem Lande gelangen, ohne daß hierzu spezielle Fernmeldekabel installiert werden müssen. Das für den Betrieb von modernen Energieverteilungs-Systemen erforderliche Lastmanagement in Echtzeit kann auf diese Weise kostengünstig realisiert werden. Fernwirkeinrichtungen zur Auslösung von Schalthandlungen erhalten Befehle via DLC. Energieversorger können ihren Kunden zusätzlich Sprach-, Daten-, Internet- und Telefonkommunikationsdienste preiswert anbieten.

Mit DLC können bei Vergleich mit dem ISDN (Integrated Services Digital Network) wesentlich höhere Datenübertragungsraten erzielt werden.

Die Datenübertragung erfolgt in europäischen Energieverteilungsnetzen vorzugsweise in den Frequenzbändern 3 kHz - 148,5 kHz und 2 MHz- 20 MHz. Es sind aber auch Systeme auf dem Markt, die dazwischen liegende Frequenzbereiche nutzen.

Die Signaleinkopplung und Signalauskopplung findet in Transformatorstationen, Schaltanlagen und Umspannwerken statt. Von dort werden die Daten dann mittels Niederspannungs-PLC an die Endkunden weitergeleitet bzw. in den Umspannwerken auf konventionelle Systeme (Telefon, Funk, Lichtwellenleiter) übergeben. Es ist aber auch möglich, daß die Kunden von Transformatorstationen und Schaltanlagen aus auf konventionellem Wege (via Telefon, Funk, Lichtwellenleiter) bedient werden. Welche Lösung optimal ist, hängt von der jeweiligen Topologie des Energieverteilungsnetzes ab.

Zur Datenübertragung auf der Mittelspannungsebene werden Kabelnetze bevorzugt, weil durch die vorhandene Schirmung der Kabel die elektromagnetische Abstrahlung auf ein Minimum reduziert werden kann. Dadurch kann die elektromagnetische Verträglichkeit (EMV) in einfacher Weise gewährleistet werden, sofern dies zur Einhaltung der vom Gesetzgeber geforderten Grenzwerte notwendig ist.

Damit die Ein- bzw. Auskopplung der Signale am Mittelspannungskabel erfolgen kann, muß die Koppeleinrichtung die Differenz zwischen Mittelspannungspotential und Erdpotential isolieren können.

Das Kabel ist im einfachsten Fall mit einem Kabelendverschluß versehen und der Kabelleiter wird mit der Koppeleinrichtung verbunden. Eine andere Lösung sieht vor, daß der Kabelmantel mit einem geschirmten Gehäuse und der Kabelleiter mit dem in diesem Gehäuse befindlichen Koppler verbunden werden. Die dazu erforderlichen Montagearbeiten sind aufwendig und können nur von Spezialisten ausgeführt werden.

Die Ein- bzw. Auskopplung der Signale erfolgt mittels eines Koppelkondensators. Dessen Kapazität muß einerseits für eine effektive Kopplung ausreichend groß sein, andererseits soll der Koppelkondensator möglichst kompakt sein. Diese Bedingungen erfüllt insbesondere ein Keramikkondensator mit sehr hoher Dielektrizitätszahl.

Der Koppelkondensator bzw. die Koppeleinrichtung müssen außerdem in der Lage sein, dauernd die Betriebsspannung sowie die vorgeschriebenen Prüfspannungen zu isolieren - bei einem 20 kV Kabelnetz z.B. 125 kV Stoßspannung und 57 kV Wechselspannung über 5 Minuten. Um dies zu gewährleisten wird der Koppelkondensator in einen festen Isolierstoff eingebettet.

Am Koppelkondensator können sich schützende Elemente wie z.B. Sicherungen und Überspannungsableiter befinden. Niederspannungsseitig ist der Koppelkondensator mit einem Übertrager (Transformator) verbunden, der für eine Impedanzanpassung an das Signalverarbeitungssystem sorgt und ein definiertes elektrisches Potential herstellt.

Um die bekannten Koppeleinrichtungen zu installieren, muß das Kabel von Spezialisten aufwendig präpariert werden. Die Koppeleinrichtungen benötigen relativ viel Raum und sind somit nur bedingt für den Einsatz in kompakten Schaltanlagen geeignet. Bekannte Koppeleinrichtungen sind außerdem nicht für rauhe Umgebungsbedingungen, wie z.B. Freiluftanwendungen, geeignet. Nachteilig kann für Anwendungsfälle mit sehr niedrigem geforderten EMV-Pegel auch sein, daß die elektromagnetische Schirmung unterbrochen wird.

Der Erfindung liegt die Aufgabe zugrunde, eine insbesondere für die Distribution Line Communication (DLC) geeignete Koppeleinrichtung anzugeben, die einerseits an standardisierten Anschlußelementen von Mittelspannungs-Energieverteilungsnetzen, insbesondere Mittelspannungskabeln, auf einfache Art und Weise installiert werden kann und die andererseits flexibel hinsichtlich der Anpassung an unterschiedliche Signalverarbeitungssysteme ist.

Diese Aufgabe wird erfindungsgemäß gelöst durch eine Koppeleinrichtung zur Signaleinkopplung bzw. Signalauskopplung von Informationssignalen in Mittelspannungs-Energieverteilungsnetze bzw. aus Mittelspannungs-Energieverteilungsnetzen,
- mit einem als Keramikkondensator ausgebildeten, in einem festen Isolierstoff eingebetteten Koppelkondensator,
- dadurch gekennzeichnet, dass der Koppelkondensator aus mindestens einer zylinderförmigen, beidseitig mit Elektroden sowie Anschlüssen versehenen Keramikscheibe gebildet ist,
- wobei der eine Anschluß des Koppelkondensators über einen elektrischen Leiter mit Hochspannungspotential beaufschlagt ist,
- wobei der andere Anschluß des Koppelkondensators mit einem elektrischen Netzwerk verbunden ist, welches andererseits auf Erdpotential liegt und welches zusammen mit dem Koppelkondensator einen Spannungsteiler bildet, so daß am Signalausgang ein interessierendes Informationssignal als Schutzkleinspannung abgreifbar ist,
- wobei die Oberfläche des Isolierstoffes mit einer elektrisch leitfähigen, auf Erdpotential liegenden Beschichtung versehen ist,
- wobei das elektrische Netzwerk in einer teilweise im Isolierstoff eingebetteten, auswechselbaren, zumindest teilweise aus einem elektrisch leitfähigen Material bestehenden Kartusche untergebracht ist und
- wobei die elektrisch leitfähige Beschichtung des Isolierstoffes und das elektrisch leitfähige Material der Kartusche elektrisch miteinander kontaktiert sind.

Die mit der Erfindung erzielbaren Vorteile bestehen insbesondere darin, daß die vorgeschlagene elektromagnetisch geschirmte Koppeleinrichtung in einfacher Weise fabrikgefertigt werden kann und besonders kompakt aufgebaut ist. Die Koppeleinrichtung funktioniert auch unter erschwerten Umgebungsbedingungen (Freiluftanwendung) wartungsfrei während der gesamten Lebensdauer. Die Montagearbeiten sind auf ein Minimum reduziert, was Montagekosten einspart. Es ist eine äußerst flexible Anpassung der Koppeleinrichtung auf das konkret vorlegende Signalverarbeitungssystem möglich.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine DLC-Koppeleinrichtung für Außenkonus-Kabelanschlüsse mit einheitlichem Isolierstoff im Bereich des Konus,
- Fig. 2: eine DLC-Koppeleinrichtung für Außenkonus-Kabelanschlüsse mit abweichendem Isolierstoff im Bereich des Konus,
- Fig. 3: eine in einen Außenkonus-T-Stecker eingesteckte DLC-Koppeleinrichtung,
- Fig. 4: Maßnahmen zur Reduzierung der Höchstfeldstärke,
- Fig. 5: einen DLC-Außenkonus-T-Stecker,
- Fig. 6: einen DLC-Außenkonus-Winkelstecker,
- Fig. 7: einen DLC-Außenkonus-Stecker mit gerader Form,
- Fig. 8: eine Negativkontur des DLC-Außenkonus-Steckers für kabelseitigen Anschluß,
- Fig. 9: einen DLC-Innenkonus-Stecker,
- Fig. 10: eine in einen Innenkonus-Stecker eingesteckte DLC-Koppeleinrichtung,
- Fig. 11: eine DLC-Koppeleinrichtung mit Endverschluß zum Anschluß an Sammelschienen oder Freiluftanlagen,
- Fig. 12: eine Prinzipdarstellung des Parallelbetriebes von DLC-Koppeleinrichtungen,
- Fig. 13: einen Parallelbetrieb von DLC-Koppeleinrichtungen mit Kombination von zwei DLC-Außenkonus-Steckern.

Nachstehend wird zunächst der Aufbau einer DLC-Koppeleinrichtung für Außenkonus-Kabelanschlüsse erläutert.

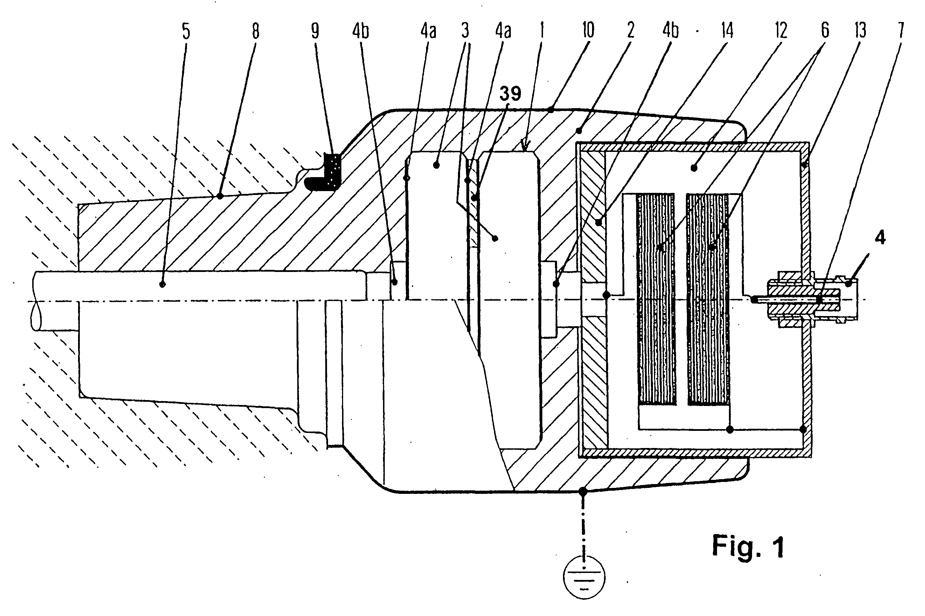

Bei einer Vorzugsvariante der DLC-Koppeleinrichtung gemäß Fig. 1 ist ein als Keramikkondensator ausgebildeter Koppelkondensator 1 in einen festen Isolierstoff 2 - z.B. Kunstharz oder Silikongummi - eingebettet. Der Koppelkondensator 1 besteht aus mindestens einer zylinderförmigen Keramikscheibe 3 mit hoher Dielektrizitätszahl, die beidseitig mit Elektroden 4a sowie Anschlüssen 4b versehen ist. Vorzugsweise weist der Koppelkondensator mehrere elektrisch in Reihe liegende und mit Elektroden/Anschlüssen versehene zylinderförmige Keramikscheiben 3 auf. Beim Ausführungsbeispiel gemäß Fig. 1 sind zwei Keramikscheiben über einen Lotring 39 miteinander verbunden (alternativ sind selbstverständlich andere Verbindungstechniken einsetzbar).

Auf seiner einen Seite ist der Koppelkondensator 1 über Anschluß 4b und einen zylindrischen elektrischen Leiter 5 mit dem die Hochspannung führenden Leiter, insbesondere Kabelleiter verbunden. Auf seiner anderen Seite ist der Koppelkondensator 1 über Anschluß 4b mit einem elektrischen Netzwerk 6 verbunden, das an das Erdpotential angeschlossen ist. Die elektrische Impedanz des elektrischen Netzwerkes 6 bildet zusammen mit dem Koppelkondensator 1 einen Spannungsteiler, so daß am Signalausgang 7 des elektrischen Netzwerkes 6 eine Schutzkleinspannnung garantiert ist. Zusätzlich kann mit dem elektrischen Netzwerk 6 eine Impedanzanpassung an das konkret vorliegende Signalverarbeitungssystem realisiert werden. Die Spannungsteilerfunktion und die Impedanzanpassfunktion dieses elektrischen Netzwerkes 6 können z.B. von einem Übertrager (Transformator) übernommen werden.

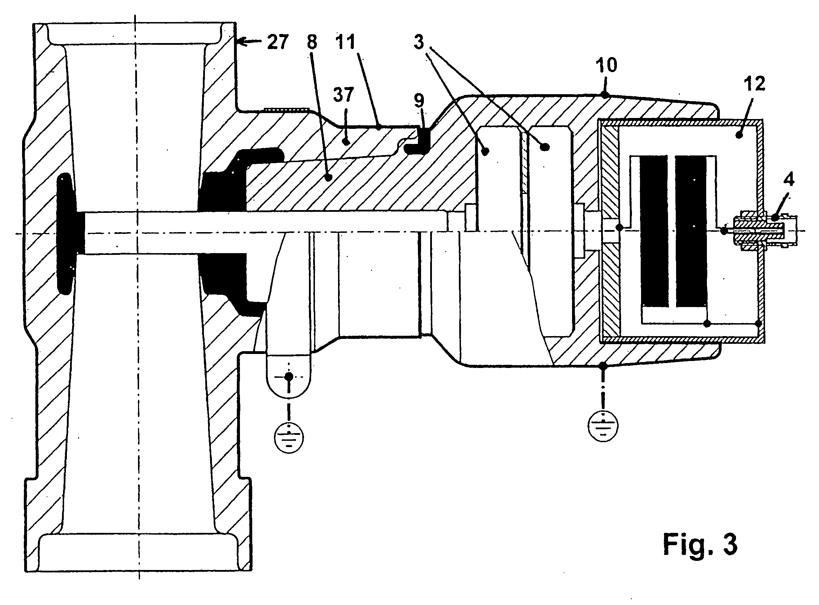

Die hochspannungsseitige Verbindung des Koppelkondensators 1 mit dem Leiter bzw. Kabelleiter ist konzentrisch von einem festen Isolierstoff umhüllt, der vorzugsweise gleich dem Isolierstoff 2 ist, in den auch der Koppelkondensator 1 eingebettet ist - siehe Fig. 1. Die Außenkontur dieses Isolierstoffes 2 bzw. dieser Isolierstoffumhüllung verjüngt sich konisch in Richtung des Kabelanschlusses und bildet derart einen Isolierkonus 8. Der Isolierkonus 8 paßt vorzugsweise in die Buchse 37 eines Außenkonussteckers 27, speziell Außenkonus-T-Stecker, der für Anschlüsse nach DIN EN 50180 / 50181 geeignet ist - siehe Ausführungsbeispiel gemäß Fig. 3.

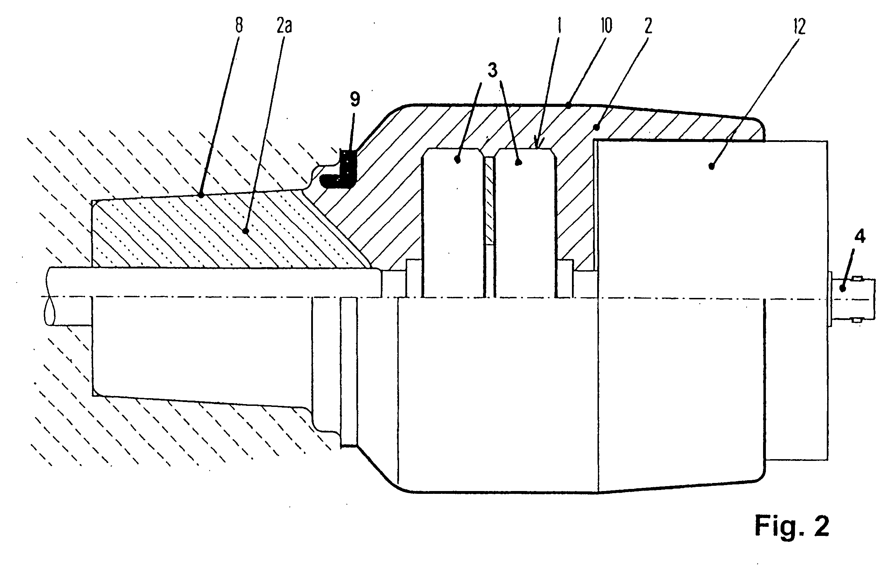

Wenn der Isolierkonus 8 an seiner Oberfläche mechanisch besonders belastbar sein soll, z.B. weil der Koppelkondensator 1 eingeschraubt werden muß, ist dort ein anderer Isolierstoff 2a einzusetzen (z.B. Epoxidharz), als zur Umhüllung des Koppelkondensators 1 (z.B. elastischer Silikongummi) verwendet wird - siehe Ausführungsbeispiel gemäß Fig. 2.

Nahe dem Kragen des Isolierkonus 8 befindet sich im Isolierkörper mit Isolierstoff 2 ein konzentrisches, elektrisch leitfähiges Feldsteuerelement 9. Der den Koppelkondensator 1 umhüllende Isolierkörper mit Isolierstoff 2 ist auf seiner Oberfläche mit einer elektrisch leitfähigen Beschichtung 10 versehen. Die elektrisch leitfähige Beschichtung 10 trägt das Erdpotential und schirmt die elektromagnetische Strahlung ab, die vom DLC-Signal (Informationssignal, Signalspannung) ausgehen kann.

Das elektrisch leitfähige Feldsteuerelement 9 ist auf seinem gesamten Umfang mit der elektrisch leitfähigen Beschichtung 10 des Isolierkörpers mit Isolierstoff 2 verbunden. Durch diese Maßnahme wird an dieser Stelle die Trennfuge zum elektrisch leitfähigen Mantel 11 des Außenkonussteckers 27 dicht gegenüber elektromagnetischer Strahlung gestaltet und das Erdpotential kann übertragen werden - siehe Fig. 3 mit Beschichtung 10 - Feldsteuerelement 9 - leitfähiger Mantel 11.

Um die DLC-Koppeleinrichtung flexibel an unterschiedliche Signalverarbeitungssysteme anpassen zu können, ist das elektrische Netzwerk 6 in einer auswechselbaren Kartusche 12 untergebracht - siehe Fig. 1. Die Kartusche 12 kann z.B. eine Schraubverbindung mit dem korrespondierend gestalteten Anschluß 4b des Koppelkondensators 1 haben.

Die Kartusche 12 besteht an ihrem Umfang und zum Signalverarbeitungssystem hin aus elektrisch leitfähigem Material 13 oder ist zumindest in geeigneter Weise elektrisch leitfähig beschichtet, so daß die Konfiguration elektromagnetisch dicht ist, wenn die Kartusche 12 mit der elektrisch leitfähigen Beschichtung 10 des Isolierkörpers mit Isolierstoff 2 verbunden ist. Die Kartusche 12 kann das Erdpotential übertragen. Die Kartusche 12 ist zum Koppelkondensator 1 hin mit einer Scheibe 14 aus elektrisch isolierendem Material versehen, so daß die Signalspannung gegenüber dem Anschluß 4b des Koppelkondensators 1 isoliert wird. Die elektrisch leitfähige Beschichtung 10 des Isolierkörpers mit Isolierstoff 2 und das elektrisch leitfähige Material 13 der Kartusche 12 sind so miteinander verbunden, daß die Fuge zwischen Isolierkörper mit Isolierstoff 2 und Kartusche 12 elektromagnetisch dicht ist und das Erdpotential übertragen wird.

Der Signalausgang 7 für das DLC-Signal ist vorzugsweise ein koaxiales Anschlusselement 4 (z.B. eine BNC-Buchse), dessen Schirm elektrisch leitfähig mit der Kartusche 12 verbunden ist. Dadurch ist es möglich, eine lückenlose elektromagnetische Schirmung bis hin zum Signalverarbeitungssystem zu realisieren. Der Isolierkörper mit Isolierstoff 2 und die Kartusche 12 sind so gestaltet, daß sie auch unter Freiluftbedingungen eingesetzt werden können. Dazu ist der äußere Teil der Kartusche 12 vorzugsweise entsprechend versiegelt.

Die Kartusche 12 ist wasserdicht (bis zu 1 m Wassertiefe) in den Isolierkörper mit Isolierstoff 2 der DLC-Koppeleinrichtung eingefügt. Die Wasserdichtheit der Kartusche 12 selbst bzw. des koaxialen Signalanschlusses des Signalausgangs 7 wird durch die äußere Versiegelung und ein entsprechend wasserdichtes Anschlusselement und/oder dadurch realisiert, daß der Innenraum der Kartusche 12 in geeigneter Weise mit einem elektrisch isolierenden Material ausgegossen ist.

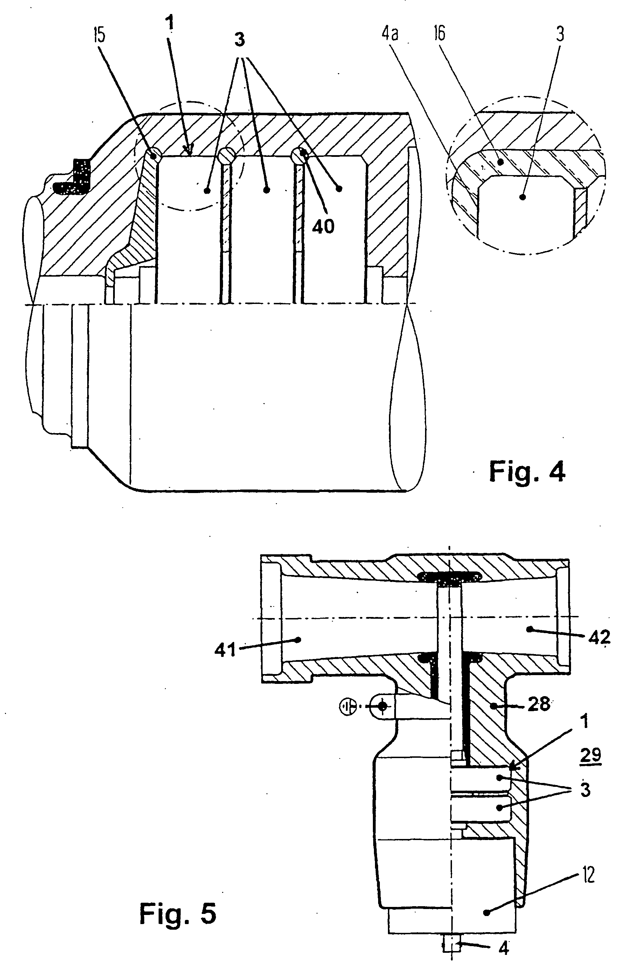

Da der Durchmesser des den Koppelkondensator 1 umhüllenden Isolierkörpers mit Isolierstoff 2 möglichst klein (kompakt) sein soll, müssen Maßnahmen ergriffen werden, damit die den Isolierkörper und die Grenzfläche zwischen Isolierkörper und Koppelkondensator 1 belastende elektrische Feldstärke zulässige Grenzwerte nicht überschreitet. Um dies zu erreichen, wird an der die Hochspannung führenden Elektrode 4a des Koppelkondensators 1 eine Feldsteuerelektrode 15 angebracht - siehe Fig. 4.

Kritische elektrische Feldstärken können auch vermieden werden, wenn die Keramikscheiben 3 mit einem Isolierstoff 16 umhüllt sind, der seinerseits mit dem Isolierstoff 2 umhüllt ist - siehe Detailvergrößerung in Fig. 4, wobei der Isolierstoff 16 eine höhere Dielektrizitätszahl aufweist, als der Isolierstoff 2. Vorteilhaft ist es auch, wenn der Isolierstoff 16 ein höheres Isoliervermögen hat als der Isolierstoff 2. Durch die elektrische Reihenschaltung mehrerer Keramikscheiben 3 wird für eine gleichmäßigere Potentialverteilung gesorgt und kritische Feldstärken werden vermieden - siehe wiederum Fig. 4 bei einer Anordnung mit drei Keramikscheiben 3. Zweckmäßig ist an der Fuge zwischen jeweils zwei Keramikscheiben 3 ein Feldsteuerelement 40 aus elektrisch leitfähigem Material angeordnet.

Feldsteuerelektrode 15 bzw. Feldsteuerelemente 40 können zusätzlich von dem Isolierstoff 16 umhüllt sein.

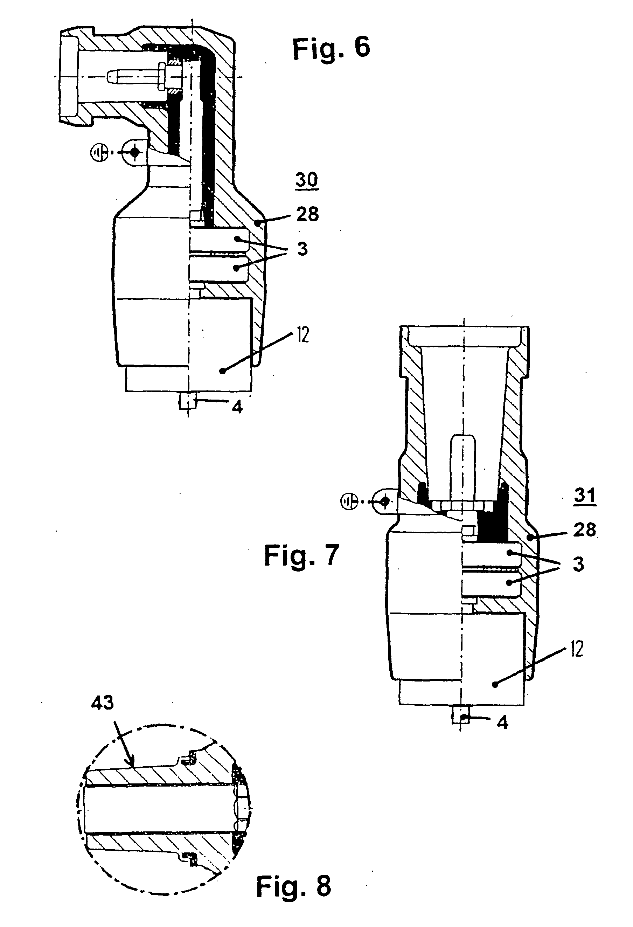

Wenn auf eine in Fig. 3 gezeigte flexible Anpassung der DLC-Koppeleinrichtung zur Hochspannungsseite hin verzichtet werden kann - z.B. weil eine gemeinsame Variante für 12 kV-Netze und 24 kV-Netze verfügbar ist - wird der Koppelkondensator 1 direkt in den Isolierstoff 28 eines Außenkonussteckers eingegossen - siehe Ausführungsform gemäß Fig. 5 mit Außenkonus-T-Stecker 29, Ausführungsform gemäß Fig. 6 mit Außenkonus-Winkelstecker 30 und Ausführungsform gemäß Fig. 7 mit geradem Außenkonusstecker 31. Beim Außenkonus-T-Stecker 29 gemäß Fig. 5 sind zwei Steckbuchsen 41, 42 bezeichnet, wovon die Steckbuchse 41 zum Aufstecken auf einen entsprechenden Außenkonus der Anlage und die Steckbuchse 42 beispielsweise zum Aufstekken einer Anschlußkontur 43 gemäß Fig. 8 geeignet ist.

Eine noch kompaktere Gestaltung von DLC-Außenkonussteckern nach Fig. 3 und Fig.5/6/7 ist möglich, wenn die Anschlußkontur 43 nach Fig. 8 genutzt wird - beispielsweise zum Anschluß eines Überspannungableiters entsprechender Anschlußkontur 43 (Einstecken in Steckbuchse 42).

Nachstehend wird der Aufbau einer DLC-Koppeleinrichtung für Innenkonus-Kabelanschlüsse erläutert.

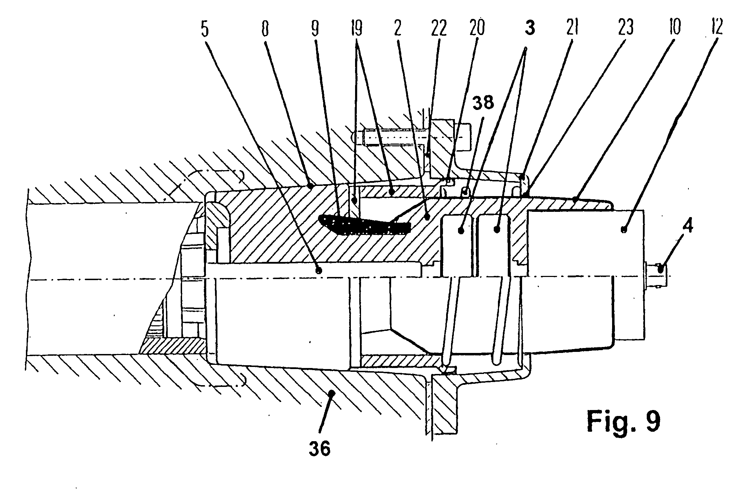

Der Isolierkonus 8 paßt in einer anderen Ausführung direkt in die Steckbuchsen 36 eines Gehäuses 22 von Innenkonus-Systemen nach DIN EN 50180 / 50181 - siehe Fig. 9.

Beim in Fig. 9 gezeigten DLC-Innenkonus-Stecker mit zwei Keramikscheiben 3 des Koppelkondensators, Leiter 5, Isolierkonus 8, Kartusche 12 und Anschlußelement 4 ist zusätzlich ein metallischer, federbelasteter, gegen den Isolierkonus 8 pressender Druckschieber 19 auf seinem Umfang mit dem elektrisch leitfähigen Feldsteuerelement 9 und/oder mit der elektrisch leitfähigen Beschichtung 10 des Isolierkörpers mit Isolierstoff 2 verbunden. Der Druckschieber 19 kann mittels eines zusätzlichen ersten, elektrisch leitfähigen, elastischen Elementes 20 - z.B. Ring aus elektrisch leitfähigem Silikon - die Trennfuge gegenüber einem metallischen, über eine Feder 38 gegen den Druckschieber 19 pressenden Befestigungsflansch 21 und damit gegenüber dem Gehäuse 22 (metallisches Anlagengehäuse) elektromagnetisch abdichten bzw. das Erdpotential übertragen. Die Verbindung zum Kabel geschieht über weitere Steckbuchsen, die sich im Gehäuse 22 befinden, oder mittels speziell gestalteter Mehrfachsteckbuchsen.

Bei der Innenkonus-Variante ist es außerdem möglich, die elektrisch leitfähige Beschichtung 10 des Isolierkörpers mit Isolierstoff 2 auf direktem Wege oder mittels eines zweiten elektrisch leitfähigen, elastischen Elementes 23 elektromagnetisch dicht mit dem metallischen Befestigungsflansch 21 zu kontaktieren bzw. das Erdpotential zu übertragen.

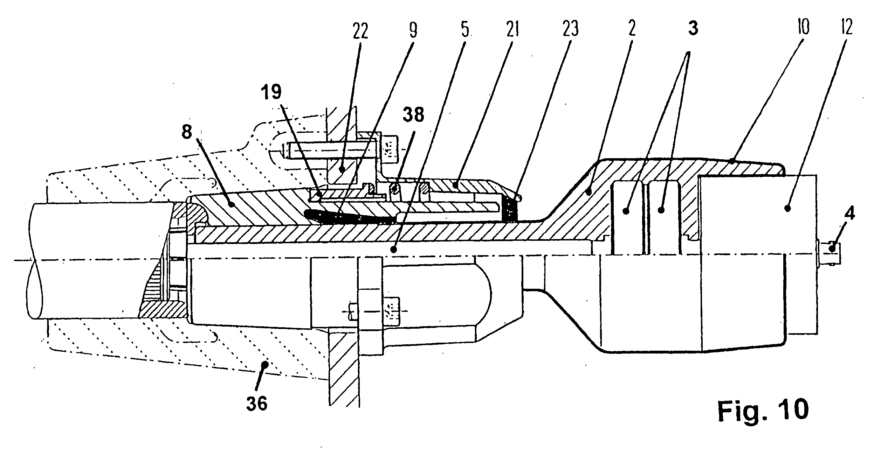

Kann auf eine kompakte Ausführung der DLC-Koppeleinrichtung verzichtet werden und/oder ist die Unterbringung des Koppelkondensators 1 im Innenkonustecker wegen dessen geringen Durchmessers nicht möglich, kann die DLC-Koppeleinrichtung in den Innenkonusstecker eingesteckt werden - siehe Ausführungsbeispiel gemäß Fig. 10 mit verlängertem Leiter 5, Isolierstoff 2, Keramikscheiben 3 des Koppelkondensators, Kartusche 12, Anschlußelement 4, Isolierkonus 8, Feldsteuerelement 9, Druckschieber 19, Feder 38, metallischem Befestigungsflansch 21, Gehäuse 22 (metallisches Außengehäuse) und zweitem, elektrisch leitfähigem, elastischem Element 23 zwischen Befestigungsflansch 21 und Beschichtung 10.

Nachstehend wird eine DLC-Koppeleinrichtung für den Anschluß an Sammelschienen oder an Freiluftanlagen erläutert.

In speziellen Anwendungsfällen wird die Datenübertragung (Informationssignal) auf Mittelspannungsfreileitungen angestrebt. Für diesen Anwendungsfall kann auf eine kompakte Ausführung der Koppeleinrichtung verzichtet werden und die elektromagnetische Abstrahlung wird in einem bestimmten Rahmen zugelassen.

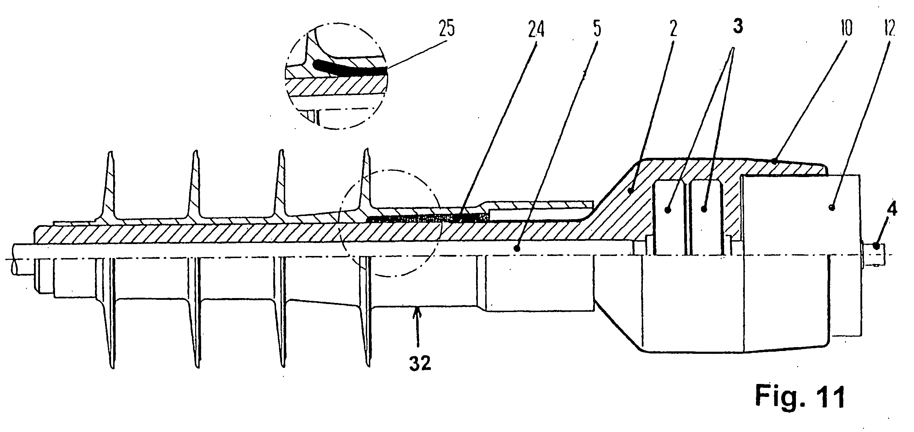

Der Anschluß der DLC-Koppeleinrichtung an Sammelschienen oder Leitungen ist möglich, wenn die Kombination der Koppeleinrichtung mit einem Innenraum- bzw. Freiluftendverschluß, allgemein Endverschluß 32 erfolgt - siehe das Ausführungsbeispiel gemäß Fig. 11 mit Leiter 5, Isolierstoff 2, Keramikscheiben 3 des Koppelkondensators, Kartusche 12, Anschlußelement 4. Ein refraktives Feldsteuerelement 24 oder alternativ ein elektrisch leitfähiges Feldsteuerelement 25 (siehe Detailvergrößerung in Fig. 11) des Endverschlusses 32 kontaktiert die Beschichtung 10 und steuert die Feldstärke an der Kante der Beschichtung 10 des Isolierkörpers mit Isolierstoff 2 ab. Der Leiter 5 wird mit der Sammelschiene bzw. der Freiluftanlage verbunden.

Nachstehend wird der Parallelbetrieb von DLC-Koppeleinrichtungen erläutert.

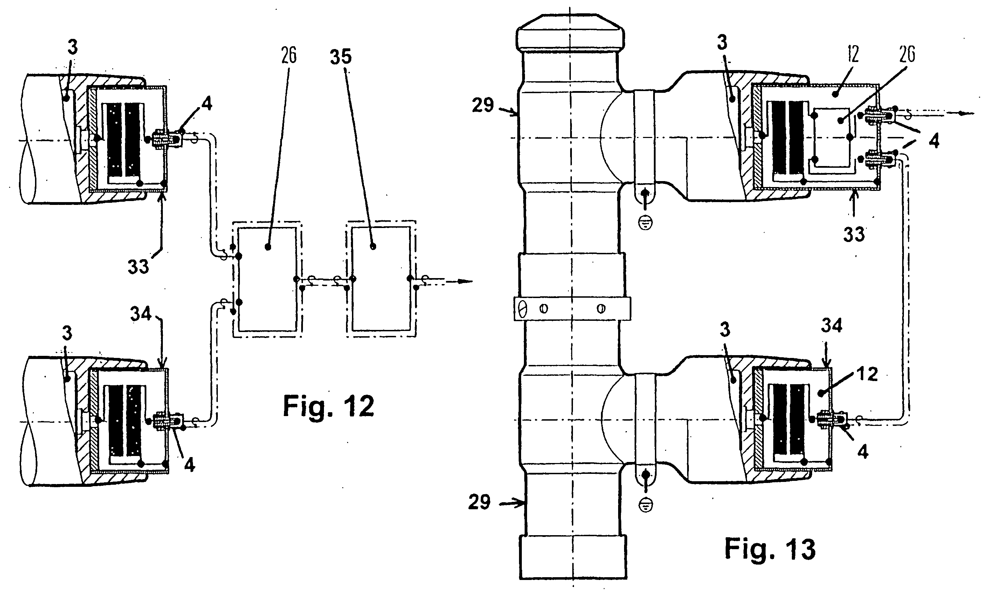

Die Effektivität der Signalkopplung kann durch den Parallelbetrieb von zwei DLC-Koppeleinrichtungen 33, 34 erhöht werden - siehe Prinzipdarstellung gemäß Fig. 12. Dadurch kann allgemein die maximal erreichbare Übertragungsentfernung zwischen zwei DLC-Koppelkondensatoren vergrößert werden. Die über die Anschlußelemente 4 abgreifbaren Informationssignale (Ausgangssignale) der beiden parallelen DLC-Koppeleinrichtungen 33, 34 werden vorzugsweise mittels einer differentiellen Ausgangsstufe 26 vereint.

Diese differentielle Ausgangsstufe 26 kann sich in einer der beiden Kartuschen 12 der DLC-Koppeleinrichtungen 33, 34 befinden, wie Fig. 13 zeigt. Die Kartusche 12 mit differentieller Ausgangsstufe 26 weist zwei Anschlußelemente 4 für ein Eingangssignal zur Ausgangsstufe 26 und für das gemeinsame Informationssignal von der Ausgangsstufe 26 zu einem Signalverarbeitungssystem 35 auf.

Der Parallelbetrieb von DLC-Koppeleinrichtungen ist z.B. möglich durch:
- Kombination der DLC-Koppeleinrichtung nach Fig. 1 mit DLC-Außenkonussteckern nach Fig. 3 bzw. Fig. 5, 6, 7, 8 miteinander,
- Kombinationen von DLC-Außenkonussteckern nach Fig. 3 bzw. Fig. 5, 6, 7, 8 miteinander,
- Einsatz paralleler Steckbuchsen zur Aufnahme von DLC-Innenkonussteckern nach Fig. 9 bzw. Fig. 10,
- parallele Befestigung von DLC-Freileitungskopplern nach Fig. 11 an Sammelschienen oder Freileitungen.

Fig. 13 zeigt die Ausführungsform eines Parallelbetriebes mit zwei Außenkonus-T-Steckern 29 gemäß Fig. 5.

## Patentansprüche

1. Koppeleinrichtung zur Signaleinkopplung bzw. Signalauskopplung von Informationssignalen in Mittelspannungs-Energieverteilungsnetze bzw. aus Mittelspannungs-Energieverteilungsnetzen,
- mit einem als Keramikkondensator ausgebildeten, in einem festen Isolierstoff (2, 28) eingebetteten Koppelkondensator (1), **dadurch gekennzeichnet, dass**
- der Koppelkondensator aus mindestens einer zylinderförmigen, beidseitig mit Elektroden (4a) sowie Anschlüssen (4b) versehenen Keramikscheibe (3) gebildet ist,
- wobei der eine Anschluß (4b) des Koppelkondensators (1) über einen elektrischen Leiter (5) mit Hochspannungspotential beaufschlagt ist,
- wobei der andere Anschluß (4b) des Koppelkondensators (1) mit einem elektrischen Netzwerk (6) verbunden ist, welches andererseits auf Erdpotential liegt und welches zusammen mit dem Koppelkondensator (1) einen Spannungsteiler bildet, so daß am Signalausgang (7) ein interessierendes Informationssignal als Schutzkleinspannung abgreifbar ist,
- wobei die Oberfläche des Isolierstoffes (2, 28) mit einer elektrisch leitfähigen, auf Erdpotential liegenden Beschichtung (10) versehen ist,
- wobei das elektrische Netzwerk (6) in einer teilweise im Isolierstoff eingebetteten, auswechselbaren, zumindest teilweise aus einem elektrisch leitfähigen Material (13) bestehenden Kartusche (12) untergebracht ist und
- wobei die elektrisch leitfähige Beschichtung (10) des Isolierstoffes (2, 28) und das elektrisch leitfähige Material (13) der Kartusche elektrisch miteinander kontaktiert sind.

2. Koppeleinrichtung nach Anspruch 1, **dadurch gekennzeichnet, daß** der den elektrischen Leiter (5) umhüllende Isolierstoff (2) dem Isolierstoff (2, 28) entspricht, in welchem auch der Koppelkondensator (1) eingebettet ist.

3. Koppeleinrichtung nach Anspruch 1, **dadurch gekennzeichnet, daß** der den elektrischen Leiter (5) umhüllende Isolierstoff (2a) mechanisch besonders belastbar ist und nicht dem Isolierstoff (2, 28) entspricht, in welchem der Koppelkondensator (1) eingebettet ist.

4. Koppeleinrichtung nach einem der vorstehenden Ansprüche, **dadurch gekennzeichnet, daß** der den elektrischen Leiter (5) umhüllende Isolierstoff (2, 2a, 28) als Isolierkonus (8) ausgebildet ist.

5. Koppeleinrichtung nach einem der vorstehenden Ansprüche, **dadurch gekennzeichnet, daß** sich im Isolierstoff (2, 28), in welchem der Koppelkondensator (1) eingebettet ist, auf der mit Hochspannung beaufschlagten Seite ein konzentrisches, elektrisch leitfähiges Feldsteuerelement (9) befindet, welches auf seinem gesamten Umfang mit der elektrisch leitfähigen Beschichtung (10) verbunden ist.

6. Koppeleinrichtung nach einem der vorstehenden Ansprüche, **dadurch gekennzeichnet, daß** die Kartusche (12) zum Koppelkondensator (1) hin mit einer Scheibe (14) aus einem elektrisch isolierendem Material versehen ist.

7. Koppeleinrichtung nach einem der vorstehenden Ansprüche, **dadurch gekennzeichnet, daß** der Anschluß (4b) der Kartusche (12) an den Koppelkondensator (1) mittels einer Schraubverbindung erfolgt.

8. Koppeleinrichtung nach einem der vorstehenden Ansprüche, **dadurch gekennzeichnet, daß** der Signalausgang (7) an der Kartusche (12) über ein koaxiales Anschlußelement (4) erfolgt, dessen Schirm elektrisch leitend mit der Kartusche (12) verbunden ist.

9. Koppeleinrichtung nach einem der vorstehenden Ansprüche, **dadurch gekennzeichnet, daß** an der die Hochspannung führenden Elektrode (4a) des Koppelkondensators (1) eine Feldsteuerelektrode (15) angebracht ist.

10. Koppeleinrichtung nach einem der vorstehenden Ansprüche, **dadurch gekennzeichnet, daß** die mindestens eine Keramikscheibe (3) des Koppelkondensators (1) abgerundete Ecken aufweist.

11. Koppeleinrichtung nach einem der vorstehenden Ansprüche, **dadurch gekennzeichnet, daß** bei Ausbildung als Innenkonus-Stecker ein metallischer Druckschieber (19) auf seinem Umfang mit dem elektrisch leitfähigen Feldsteuerelement (9) und/oder mit der elektrisch leitfähigen Beschichtung (10) verbunden ist.

12. Koppeleinrichtung nach Anspruch 11, **dadurch gekennzeichnet, daß** ein erstes, elektrisch leitfähiges, elastisches Element (20) eine Trennfuge zwischen Druckschieber (19) und einem metallischen Befestigungsflansch (21) eines Gehäuses (22) elektromagnetisch abdichtet bzw. das Erdpotential über diese Trennfuge überträgt.

13. Koppeleinrichtung nach Anspruch 11 oder 12, **dadurch gekennzeichnet, daß** ein zweites, elektrisch leitfähiges, elastisches Element (23) eine Trennfuge zwischen einem metallischen Befestigungsflansch (21) eines Gehäuses (22) und der elektrisch leitfähigen Beschichtung (10) elektromagnetisch abdichtet bzw. das Erdpotential über diese Trennfuge überträgt.

14. Koppeleinrichtung nach einem der vorstehenden Ansprüche, **dadurch gekennzeichnet, daß** bei Ausbildung als Endverschluß (32) die elektrisch leitfähige Beschichtung (10) ein refraktives Feldsteuerelement (24) oder ein elektrisch leitfähiges Feldsteuerelement (25) des Endverschlusses kontaktiert.

15. Koppeleinrichtung nach einem der vorstehenden Ansprüche, **dadurch gekennzeichnet, daß** die Kartusche (12) zusätzlich eine differentielle Ausgangsstufe (26) sowie ein weiteres koaxiales Anschlußelement (4) für den Eingang eines Informationssignales einer parallelen Koppeleinrichtung enthält.

## Claims

1. Coupling device for signal coupling and signal decoupling of information signals into medium-voltage energy distribution systems and from medium-voltage energy distribution systems,
- having a coupling capacitor (1) configured as a ceramic capacitor and embedded in a solid insulator (2, 28), **characterised in that**
- the coupling capacitor is formed by at least one cylindrical ceramic disc (3), which is provided with electrodes (4a) and terminals (4b) on both sides,
- one terminal (4b) of the coupling capacitor (1) being supplied with high-voltage potential via an electrical conductor (5),
- the other terminal (4b) of the coupling capacitor (1) being connected to an electrical network (6), of which the other side is at earth potential and forms a voltage divider with the coupling capacitor (1), such that an information signal of interest may be tapped as a protective low voltage at the signal output (7),
- the surface of the insulator (2, 28) being provided with an electrically conductive coating (10), which is at earth potential,
- the electrical network (6) being contained in an interchangeable cartridge (12), which is partially embedded in the insulator and is at least in part made of an electrically conductive material (13) and,
- the electrically conductive coating (10) of the insulator (2, 28) and the electrically conductive material (13) of the cartridge being in electrical contact.

2. Coupling device according to claim 1, **characterised in that** the insulator (2a) enclosing the electrical conductor (5) corresponds to the insulator (2, 28) in which the coupling capacitor (1) is also embedded.

3. Coupling device according to claim 1, **characterised in that** the insulator (2a) enclosing the electrical conductor (5) can be subjected to particular mechanical loads and does not correspond to the insulator (2, 28), in which the coupling capacitor (1) is embedded.

4. Coupling device according to any one of the preceding claims, **characterised in that** the insulator (2, 2a, 28) enclosing the electrical conductor (5) is configured as an insulating cone (8).

5. Coupling device according to any one of the preceding claims, **characterised in that** a concentric, electrically conductive field control element (9), which is connected to the electrically conductive coating (10) by its entire circumference, is provided in the insulator (2, 28) in which the coupling capacitor (1) is embedded, on the side supplied with high voltage.

6. Coupling device according to any one of the preceding claims, **characterised in that** toward the coupling capacitor (1) the cartridge (12) is provided with a disc (14) consisting of an electrically insulating material.

7. Coupling device according to any one of the preceding claims, **characterised in that** the connection (4b) of the cartridge (12) to the coupling capacitor (1) is effected by means of a screw connection.

8. Coupling device according to any one of the preceding claims, **characterised in that** the signal output (7) on the cartridge (12) is carried out via a coaxial terminal element (4), of which the screen is connected to the cartridge (12) in an electrically conductive manner.

9. Coupling device according to any one of the preceding claims, **characterised in that** a field control electrode (15) is attached to the high voltage-carrying electrode (4a) of the coupling capacitor (1).

10. Coupling device according to any one of the preceding claims, **characterised in that** the at least one ceramic disc (3) of the coupling capacitor (1) has rounded corners.

11. Coupling device according to any one of the preceding claims, **characterised in that** in its configuration as an internal cone connector a metallic pressure valve (19) is connected at its circumference to the electrically conductive field control element (9) and/or to the electrically conductive coating (10).

12. Coupling device according to claim 11, **characterised in that** a first electrically conductive resilient element (20) electromagnetically seals a partition between the pressure valve (19) and a metallic fastening flange (21) of a housing (22), and transfers the earth potential via this partition.

13. Coupling device according to either claim 11 or claim 12, **characterised in that** a second electrically conductive resilient element (23) electromagnetically seals a partition between a metallic fastening flange (21) of a housing (22) and the electrically conductive coating (10), and transfers the earth potential via this partition.

14. Coupling device according to any one of the preceding claims, **characterised in that** in the configuration as a sealing end (32) the electrically conductive coating (10) contacts a refractive field control element (24) or an electrically conductive field control element (25) of the sealing end.

15. Coupling device according to any one of the preceding claims, **characterised in that** the cartridge (12) additionally comprises a differential output stage (26) as well as a further coaxial terminal element (4) for the input of an information signal of a parallel coupling device.

## Revendications

1. Dispositif de couplage pour le couplage ou le découplage de signaux d'information dans des réseaux de distribution d'énergie à moyenne tension ou provenant de réseaux de distribution d'énergie à moyenne tension,
- comprenant un condensateur de couplage (1), enveloppé dans une matière isolante solide (2, 28), réalisé sous forme de condensateur céramique, **caractérisé en ce que**
- le condensateur de couplage est formé d'au moins un disque céramique (3) cylindrique, muni des deux côtés d'électrodes (4a) ainsi que de connexions (4b),
- l'une des connexions (4b) du condensateur de couplage (1) étant soumis à un potentiel de haute tension par l'intermédiaire d'un conducteur électrique (5),
- l'autre connexion (4b) du condensateur de couplage (1) étant reliée à un réseau électrique (6), qui est raccordé d'autre part au potentiel de la terre et qui forme un diviseur de tension avec le condensateur de couplage (1), de sorte qu'un signal d'information intéressant peut être prélevé à la sortie de signal (7) sous forme de basse tension de protection,
- la surface de la matière isolante (2, 28) étant munie d'un revêtement (10) électriquement conducteur qui est au potentiel de la terre,
- le réseau électrique (6) étant logé dans une cartouche (12) enveloppée en partie dans la matière isolante, remplaçable, constituée au moins en partie en un matériau électriquement conducteur (13) et
- le revêtement électriquement conducteur (10) de la matière isolante (2, 28) et le matériau électriquement conducteur (13) de la cartouche étant mis en contact électrique mutuel.

2. Dispositif de couplage suivant la revendication 1, **caractérisé en ce que** la matière isolante (2) enrobant le conducteur électrique (5) correspond à la matière isolante (2, 28) dans laquelle est également enveloppé le condensateur de couplage (1).

3. Dispositif de couplage suivant la revendication 1, **caractérisé en ce que** la matière isolante (2a) enrobant le conducteur électrique (5) a une capacité de charge mécanique particulière et ne correspond pas à la matière isolante (2, 28) dans laquelle est enveloppé le condensateur de couplage (1).

4. Dispositif de couplage suivant l'une des revendications précédentes, **caractérisé en ce que** la matière isolante (2, 2a, 28) enrobant le conducteur électrique (5) est configurée sous forme de cône isolant (8).

5. Dispositif de couplage suivant l'une des revendications précédentes, **caractérisé en ce que** dans la matière isolante (2, 28) dans laquelle est enveloppé le condensateur de couplage (1) sur le côté soumis à une haute tension se situe un élément de commande de champ (9) concentrique, électriquement conducteur, qui est relié sur la totalité de son pourtour au revêtement (10) électriquement conducteur.

6. Dispositif de couplage suivant l'une des revendications précédentes, **caractérisé en ce que** la cartouche (12) est munie en direction du condensateur de couplage (1) d'un disque (14) en un matériau isolant électriquement.

7. Dispositif de couplage suivant l'une des revendications précédentes, **caractérisé en ce que** la connexion (4b) de la cartouche (12) au condensateur de couplage (1) s'effectue au moyen d'un vissage.

8. Dispositif de couplage suivant l'une des revendications précédentes, **caractérisé en ce que** la sortie de signal (7) s'effectue sur la cartouche (12) par l'intermédiaire d'un élément de jonction coaxial (4), dont le blindage est relié en conduction électrique avec la cartouche (12).

9. Dispositif de couplage suivant l'une des revendications précédentes, **caractérisé en ce qu'**une électrode de commande de champ (15) est montée sur l'électrode (4a) transportant la haute tension du condensateur de couplage (1).

10. Dispositif de couplage suivant l'une des revendications précédentes, **caractérisé en ce que** le au moins un disque céramique (3) du condensateur de couplage (1) présente des coins arrondis.

11. Dispositif de couplage suivant l'une des revendications précédentes, **caractérisé en ce que**, dans une réalisation sous forme de fiche mâle à cône intérieur, un curseur de pression métallique (19) est relié sur son pourtour à l'élément de commande de champ (9) électriquement conducteur et/ou au revêtement (10) électriquement conducteur.

12. Dispositif de couplage suivant la revendication 11, **caractérisé en ce qu'**un premier élément élastique (20), électriquement conducteur, étanchéifie électromagnétiquement une fente de séparation entre le curseur de pression (19) et une bride de fixation métallique (21) d'un boîtier (22) ou transmet le potentiel de la terre par l'intermédiaire de cette fente.

13. Dispositif de couplage suivant l'une des revendications 11 et 12, **caractérisé en ce qu'**un second élément élastique (23), électriquement conducteur, étanchéifie électromagnétiquement une fente de séparation entre une bride de fixation métallique (21) d'un boîtier (22) et le revêtement électriquement conducteur (10) ou transmet le potentiel de la terre par l'intermédiaire de cette fente.

14. Dispositif de couplage suivant l'une des revendications précédentes, **caractérisé en ce que**, dans une réalisation sous forme de boîte d'extrémité (32), le revêtement électriquement conducteur (10) est en contact avec un élément de commande de champ réfractif (24) ou un élément de commande de champ électriquement conducteur (25) de la boîte d'extrémité.

15. Dispositif de couplage suivant l'une des revendications précédentes, **caractérisé en ce que** la cartouche (12) comporte en supplément un étage de sortie différentiel (26) ainsi qu'un autre élément de jonction coaxial (4) pour l'entrée d'un signal d'information d'un appareil de couplage parallèle.
